# EUROPEAN PATENT APPLICATION

(11) **EP 1 925 574 A1**
(43) Date of publication of application: **28.05.2008**
(21) Application number: 07076000.4
(22) Date of filing: 16.11.2007
(51) Int. Cl.: B65G 1/137

(54) **Method and apparatus for distibuting products among a number of customers**

(30) Priority: 22.11.2006 NL 1032914
(71) Applicant: EBM TECHNIEK B.V., 3925 CK Scherpenzeel (NL)
(72) Inventor: Meijers, Pieter Cornelis, 3738 WK Maartensdijk (NL); Jaffra, Marco, 6922 HT Duiven (NL)
(74) Representative: 't Jong, Bastiaan Jacob

(57) **Abstract**

The invention relates to a method for distributing a large number of different products among a large number of customers, which method comprises of:
- supplying the same products (3) in batches;
- fully filling product containers (4) with a number of the same products;
- collecting fully filled product containers (4) per customer in accordance with predetermined requirement;
- transporting remaining products to a buffer (7);
- collecting different products in the buffer (7);
- filling at least one product container per customer with different products from the buffer (7) in accordance with the products still missing per customer;
- placing the product container(s) (4) filled with different products with the fully filled product containers already collected per customer.

## Description

The invention relates to a method for distributing a large number of different products among a large number of customers. Such a method is applied for instance in the distribution of different types of bread among the different customers of an industrial baker. Such a baker normally produces a hundred or more types of bread daily. A type is for instance defined by the kind of bread, but also by the packaging, type of decoration such as poppy seed, sesame seed and the like, possible labels on the package and or whether or not the bread is sliced. These different types must then be distributed among many customers, wherein more than a hundred is a typical number. Each customer orders the products per unit, and it may thus occur that the baker bakes only one loaf for only one customer.

It is usual at the moment to first produce all types of bread and to place all of these types ready in product containers adjacently of a large distribution field. This distribution field is then divided into rows, and the customers are then divided over these rows. The products required per row are subsequently placed ready at the beginning of the rows. The quantity of placed products is then distributed manually per row among the different customers in this row.

The products are placed in product containers, in the case of loaves these being crates in which a number of products can be accommodated. Since the customers can order per unit, it may occur that, of different products, only a few are required for a customer. It may hereby not be possible to completely fill the product containers with one type of product, but the products will have to be placed together manually in order to thus enable filling of the containers. When all the types of product have been distributed among the different customers on the field, it may occur that a number of products of a determined type are missing. These products are then made in order to thus enable the order to be filled.

Is now an object of the invention to provide a method which makes the distribution of the products more efficient and whereby an at least partial automation becomes possible.

This object is achieved with a method for distributing a large number of different products among a large number of customers, which method comprises of:
- supplying the same products in batches;
- fully filling product containers with a number of the same products;
- collecting fully filled product containers per customer in accordance with predetermined requirement;
- transporting remaining products to a buffer;
- collecting different products in the buffer;
- filling at least one product container per customer with different products from the buffer in accordance with the products still missing per customer;
- placing the product container(s) filled with different products with the fully filled product containers already collected per customer.

In this method according to the invention the distribution of the products among the different customers is divided into two. First of all, fully filled product containers are distributed among the different customers and, separately thereof, product containers are filled with the different products so as to thus enable supplementing to the desired quantities per customer. By dividing the distribution of products it is simpler to automate parts of the method.

In a preferred embodiment of a method according to the invention a number of fully filled product containers with one product are collected per customer which equal the quotient of the desired number of said product divided by the number of products per product container, and the remainder of the desired products are brought together in a product container with the other desired products per customer in the buffer. In short, the fully filled product containers are used to approximate as well as possible the desired number per customer, and only the remainder of the desired products is brought together in a product container.

The collected product containers for different customers are preferably placed in rows such that at least a part of the row of product containers can be delivered to the relevant customer by a transport means. If the rows are for instance in line with a truck loading and unloading platform, the rows can be easily shifted into the trucks and subsequently taken to the customer. It is important here that the rows are assembled such that the truck has a logical delivery route.

In another preferred embodiment of the method according to the invention product containers are stacked per customer during filling of the product containers. This is because during filling of the product containers the order of the customers is already known and, when a customer wishes two or more fully filled product containers of one type, these product containers can then already be stacked during filling of the product containers. This simplifies transport of already filled product containers.

In a preferred embodiment of the method according to the invention filling of product containers from the buffer already begins while new batches of products still have to be placed in product containers. Subject to the quantities desired by the customers, it may be that after a rough distribution of two different products it is possible to fill product containers with the two products in the buffer, and thus collect together the full desired quantities for a customer. This depends on the orders and the sequence in which the products are produced.

In another embodiment of the method according to the invention a number of different products are already present in the buffer during the supply of new batches of products, and the sequence of filling at least one product container per customer with different products from the buffer in accordance with the products still missing per customer depends on the products already present in the buffer. Completion of the filling of product containers with different products from the buffer thus depends on the customer wishes and the supply of batches of products. Such a process can be optimized particularly well by means of software which takes account of the quantities desired per customer and the supply of batches of products.

The invention further comprises an apparatus for performing the method according to the invention, which apparatus comprises:
- a filling station for filling product containers with products;
- a collecting station for collecting filled product containers on a field per customer;
- a buffer for storing products remaining from the filling station; and
- a transport means such as a conveyor belt for displacing product containers between the filling station, the collecting station and the buffer.

In the filling station the products are placed in product containers. This results in product containers which are fully filled with one product and which are then transported via the conveyor means to the collecting station, where product containers already fully filled can be placed per customer, and the remaining products can then be placed in the buffer for subsequent combining of the remaining products in product containers and subsequent collection thereof per customer on the field.

In an embodiment of the apparatus according to the invention the collecting station comprises a manipulator displaceable over the field for the purpose of placing product containers as required on the field. In this way the product containers can be readily stacked in a kind of matrix, and a manipulator can reach any position in the field at any desired moment.

In a further preferred embodiment of the apparatus according to the invention the manipulator picks up a number of product containers for different customers and places these successively per customer on the field. A higher capacity can hereby be obtained.

In another embodiment of the apparatus according to the invention the collecting station comprises a buffer for buffering product containers which have been taken from the conveyor means. The conveyor means can thus be left clear for transit of new product containers, and it is not necessary for the collecting station to place the product containers directly on the field.

In a further embodiment the buffer comprises a number of buffer rows and the field is divided into rows of collecting locations for product containers per customer. Owing to these buffer rows a preselection can already be made from the arriving product containers, whereby the product containers are already situated in the vicinity of the row where they have to be placed.

Yet another embodiment of the apparatus according to the invention comprises a number of transport carriers, for instance dollies, which are distributed over the field and on which the product containers for a customer can be placed. This has the advantage that, after the distribution of the different product containers so that the desired quantities per customer have been collected, these quantities can be easily displaced into for instance a waiting truck.

In yet another preferred embodiment of the apparatus according to the invention the manipulator picks up and distributes the transport carriers over the field. This distribution of transport carriers takes place before the first filled product containers arrive in the collecting station. The distribution of the transport carriers can take place on the basis of the orders from the different customers.

These and other features of the invention are further elucidated with reference to the accompanying drawings.

Figure 1 shows a schematic top view of a first part of an apparatus according to the invention.

Figure 2 shows a schematic top view of a second part of the apparatus according to figure 1.

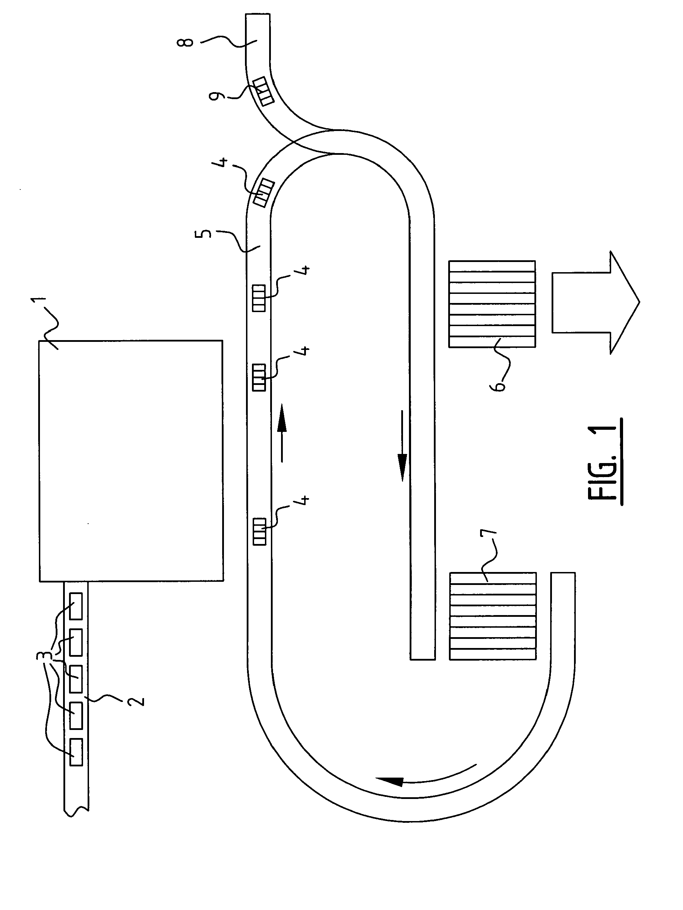

Figure 1 shows an apparatus according to the invention which has a filling station 1 to which a batch of products 3 is carried via a conveyor 2. Filling station 1 then loads these products 3 into product containers 4 which are discharged on a conveyor belt 5. Product containers 4 are subsequently carried past a collecting station 6 and, if they are not placed in collecting station 6, they are carried to buffer 7 and there stored. Product containers 9 can be introduced into the system via an infeed conveyor 8. These product containers 9 can for instance comprise products that are produced outside the factory.

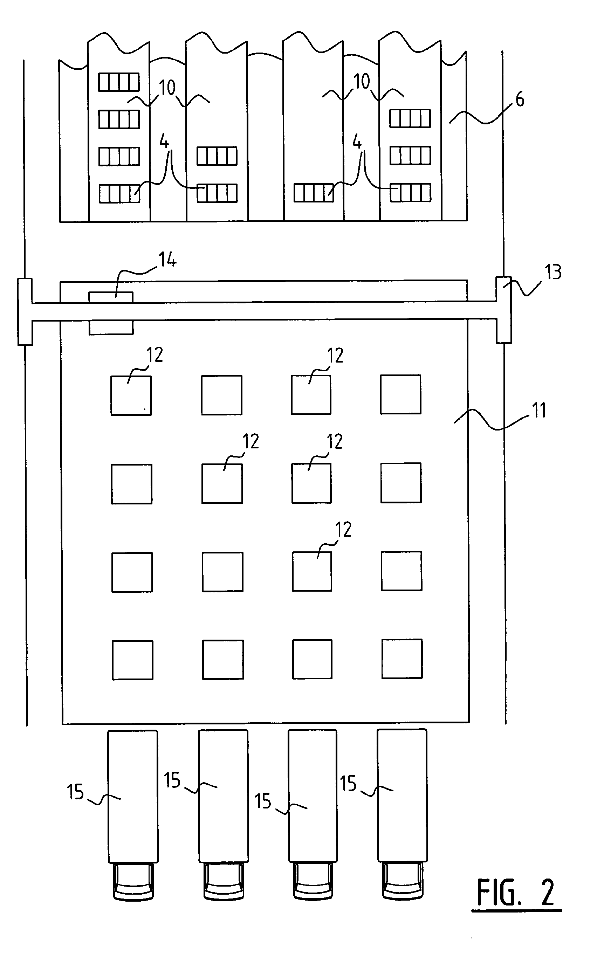

Figure 2 shows a second part of the apparatus according to the invention. Still shown in figure 2 is a part of the buffer 6 having therein four buffer rows 10 in which product containers 4 have been buffered. Provided in line with buffer rows 10 is a field 11 which is subdivided in matrix-like manner into placing locations 12. A customer is assigned to each placing location 12 and product containers 4 from buffer rows 10 are stacked at these placing locations 12. For this purpose the product containers 4 are picked up from buffer rows 10 by means of a manipulator, in particular an overhead crane 13 with a displaceable carriage 14 thereon, and taken to the relevant placing location 12.

As soon as the desired quantities of product are present per placing location 12, the stacked product containers 4 can be placed in trucks 15 and subsequently transported to the relevant customers.

Dollies for instance are preferably placed on the field 11 at placing locations 12 by overhead crane 13 prior to placing of product containers 4, on which dollies the product containers can be stacked per customer and easily transported.

The operation of the apparatus proceeds as follows in accordance with the method according to the invention. Suppose that at a bakery with such an apparatus the order of two customers is as follows. Customer one would like fifteen white loaves, seven brown loaves and one bag of rolls, customer two would like eighty white loaves, fifty-five brown loaves and no rolls. Suppose further that six loaves can be stored per product container.

A bakery will produce the different types of bread in batches. The white bread for instance will thus be made first. This is fed over conveyor belt 2 to filling unit 1 so that the individual white loaves can be placed in product containers 4. Product containers 4 with the white loaves then move over conveyor belt 5 and arrive at collecting station 6. At the collecting station fifteen fully filled product containers are then accommodated in buffer 6. The remaining white bread is then fed through to buffer 7. The fully filled product containers 4 with the white loaves therein can then be transported by crane 13 to the relevant placing locations 12. For this purpose two product containers 4 are placed for the first customer at placing location 12, while thirteen product containers 4 with white bread are placed for the second customer at placing location 12. The bakery will then produce for instance the brown bread. This too is once again supplied separately over conveyor belt 2 to filling station 1 where the brown loaves are placed in product containers 4. Six loaves here also go into one product container 4. Having arrived at collecting station 6, a total of ten fully filled product containers are taken off and the remaining brown bread is then fed once again to buffer 7. In collecting station 6 one product container 4 of brown bread then goes to the first customer, while nine product containers 4 with brown bread go to the second customer.

At this moment the first customer is still missing three white loaves, one brown loaf and one bag of rolls, while the second customer is still missing two white loaves and one brown loaf. Since white bread and brown bread are already present in buffer 7, a product container 4 can here be filled with two white loaves and one brown loaf for the second customer. This product container 4 filled with different types of bread then passes via conveyor belt 5 to collecting station 6 where the product container with the two white loaves and the one brown loaf can go to placing location 12 of the second customer. The complete order of the second customer is hereby collected at the placing location.

Finally, the bakery will also produce the one bag of rolls which are then placed by filling unit 1 in a product container 4 and transported to buffer 7. Since white bread, brown bread and rolls are now available there, a product container can there be filled with three white loaves, one brown loaf and one bag of rolls, after which this product container filled with different types of bread can be taken to collecting station 6 and the order of customer one can be completed.

In this way the different products can be efficiently distributed among the different placing locations 12 for the different customers subject to their requirement. When all products have been distributed, the collected products can be shifted into trucks 15 and the orders can be delivered to the customers.

## Claims

1. Method for distributing a large number of different products among a large number of customers, which method comprises of:
- supplying the same products in batches;
- fully filling product containers with a number of the same products;
- collecting fully filled product containers per customer in accordance with predetermined requirement;
- transporting remaining products to a buffer;
- collecting different products in the buffer;
- filling at least one product container per customer with different products from the buffer in accordance with the products still missing per customer;
- placing the product container(s) filled with different products with the fully filled product containers already collected per customer.

2. Method as claimed in claim 1, wherein a number of fully filled product containers with one product are collected per customer which equal the quotient of the desired number of said product divided by the number of products per product container, and wherein the remainder of the desired products are brought together in a product container with other desired products per customer in the buffer.

3. Method as claimed in claim 1 or 2, wherein the collected product containers for different customers are placed in rows such that at least a part of the row of product containers can be delivered to the relevant customers by a transport means.

4. Method as claimed in any of the foregoing claims, wherein product containers are stacked per customer during filling of the product containers.

5. Method as claimed in any of the foregoing claims, wherein filling of product containers from the buffer already begins while new batches of products still have to be placed in product containers.

6. Method as claimed in claim 5, wherein a number of different products are already present in the buffer during the supply of new batches of products, and wherein the sequence of filling at least one product container per customer with different products from the buffer in accordance with the products still missing per customer depends on the products already present in the buffer.

7. Apparatus for performing a method as claimed in any of the foregoing claims, comprising:
- a filling station for filling product containers with products;
- a collecting station for collecting filled product containers on a field per customer;
- a buffer for storing products remaining from the filling station; and
- a transport means such as a conveyor belt for displacing product containers between the filling station, the collecting station and the buffer.

8. Apparatus as claimed in claim 7, wherein the collecting station comprises a manipulator displaceable over the field for the purpose of placing product containers as required on the field.

9. Apparatus as claimed in claim 8, wherein the manipulator picks up a number of product containers for different customers and places these successively per customer on the field.

10. Apparatus as claimed in any of the claims 7-9, wherein the collecting station comprises a buffer for buffering product containers which have been taken from the conveyor means.

11. Apparatus as claimed in claim 10, wherein the buffer comprises a number of buffer rows and wherein the field is divided into rows of collecting locations for product containers per customer.

12. Apparatus as claimed in any of the claims 7-11, comprising a number of transport carriers, for instance dollies, which are distributed over the field and on which the product containers for a customer can be placed.

13. Apparatus as claimed in any of the claims 12 and 8 or 9, wherein the manipulator picks up and distributes the transport carriers over the field.
